# EUROPEAN PATENT APPLICATION

(11) **EP 4 472 332 A1**
(43) Date of publication of application: **04.12.2024**
(21) Application number: 23773850.5
(22) Date of filing: 21.03.2023
(51) Int. Cl.: H04W 76/19

(54) **INFORMATION TRANSCEIVING METHOD, DEVICE AND STORAGE MEDIUM**

(30) Priority: 25.03.2022 CN 202210306878
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: XIE, Fang, Beijing 100032 (CN)
(74) Representative: Weickmann & Weickmann PartmbB
(86) International application number: PCT/CN2023/082763
(87) International publication number: WO 2023/179603

(57) **Abstract**

This disclosure provides an information transmitting method, an information receiving method, a device, and a storage medium. The information transmitting method includes: a user equipment (UE) reports first information, the first information being information related to fast master cell group link recovery. The information receiving method includes: a base station receives the first information reported by the UE; the base station configures the fast master cell group link recovery based on the first information.

## Description

### CROSS-REFERENCE TO RELATED APPLICATION

The present application claims priority to a Chinese Patent Application No. 202210306878.2, filed in China on March 25, 2022, which is incorporated herein by reference in its entirety.

### TECHNICAL FIELD

The present disclosure relates to the technical field of communications, and more particularly, to an information transmitting method, an information receiving method, a device, and a storage medium.

### BACKGROUND

In a dual connectivity scenario, if a user equipment (UE) detects that a master cell group (MCG) is experiencing a radio link failure (RLF), and the UE is configured with a fast MCG link recovery mechanism, the UE may suspend the transmission of all radio bearers in the MCG and forward MCG error information, such as measurement results of the MCG and/or a secondary cell group (SCG) measured by the UE, to a master node (MN) through the SCG. Within a predetermined duration (T316), the UE may receive feedback information such as radio resource control (RRC) reconfiguration, handover, RRC release that is sent by the MN and forwarded by the SCG, and perform subsequent operations. If the predetermined duration has elapsed and the UE has not yet received any of the aforementioned messages from the MN, then the UE initiates a re-establishment procedure. Through the fast MCG link recovery mechanism, the UE can quickly resume its connection with the MCG, thereby preventing the UE from initiating the re-establishment, and preventing the UE from entering an idle state, which affects a service experience of the UE.

A disadvantage of the related art is that the MCG link recovery mechanism cannot resume the connection between the UE and the MCG and/or SCG as soon as possible due to parameter configuration issues.

### SUMMARY

The present disclosure provides an information transmitting method, an information receiving method, a device, and a storage medium, for solving a problem that the MCG link recovery mechanism cannot resume the connection between the UE and the MCG and/or SCG as soon as possible due to parameter configuration issues.

The present disclosure provides the following technical solutions.

An information transmitting method is provided. The method includes: reporting, by a UE, first information, the first information being information related to fast master cell group link recovery.

In an implementation, the first information is obtained through one of or a combination of following manners: recording by the UE, recording by the UE according to a configuration by network administration, recording by the UE according to a configuration by a trace collection entity (TCE), and recording by the UE according to a configuration by a base station.

In an implementation, the first information is reported in one of the following conditions: the UE being in a connected state, the UE being in a transition procedure to the connected state, the UE being transmitting an RRC re-establishment request message, and the UE being transmitting a radio link failure report.

In an implementation, the first information is reported under the request of a network side, or the first information is reported by the UE proactively, or the first information is reported under the request of the network side following the UE informing the network side of existence of relevant information.

In an implementation, the first information is one or more of:
T316 configured by a network side;
a radio link failure (RLF) detection related parameter used when a master cell group (MCG) failure is detected;
a time difference between a transmitting of MCG failure information and a reception of feedback information from the network side;
an elapsed time of the T316 at the reception of the feedback information from the network side after the transmitting of the MCG failure information;
a proportion or percentage of a time duration of the T316 accounted for by the elapsed time of the T316 at the reception of the feedback information from the network side after the transmitting of the MCG failure information;
whether the feedback from the network side is received prior to expiration of the T316;
whether the feedback from the network side is received at the expiration of the T316;
feedback information received prior to the expiration of the T316;
feedback information received at the expiration of the T316;
status information of a secondary cell group (SCG);
whether the UE is performing a procedure of conditional primary SCG (PSCell) change (CPC);
whether the UE is performing a procedure of conditional PSCell addition (CPA);
whether the UE has triggered CPC;
whether the UE has triggered CPA;
indication information indicating that the UE has performed a fast MCG link recovery in case that a re-establishment or handover occurs;
measurement information of a serving cell, a neighbor cell, and a target cell measured prior to the handover being initiated or during the handover in case that a handover command is received subsequent to the transmitting of the MCG failure information;
a reconfigured parameter in case that a reconfiguration command is received subsequent to the transmitting of the MCG failure information;
a measurement result of a master node (MN), the MCG, or a primary cell (PCell) in case that an RRC release command is received subsequent to the transmitting of the MCG failure information; and
indication information indicating that the measurement result exceeds a predetermined threshold in case that the RRC release command is received subsequent to the transmitting of the MCG failure information.

An information receiving method is provided. The method includes: receiving, by a base station, first information reported by a UE, the first information being information related to fast master cell group link recovery; and configuring, by the base station, the fast master cell group link recovery based on the first information.

In an implementation, the first information is obtained through one of or a combination of following manners: recording by the UE, recording by the UE according to a configuration by network administration, recording by the UE according to a configuration by a TCE, and recording by the UE according to a configuration by a base station.

In an implementation, the first information is reported in one of the following conditions: the UE being in a connected state, the UE being in a transition procedure to the connected state, the UE being transmitting an RRC re-establishment request message, and the UE being transmitting a radio link failure report.

In an implementation, the first information is reported under the request of a network side, or the first information is reported by the UE proactively, or the first information is reported under the request of the network side following the UE informing the network side of existence of relevant information.

In an implementation, the first information is one or more of following information:
T316 configured by a network side;
a radio link failure (RLF) detection related parameter used when a master cell group (MCG) failure is detected;
a time difference between a transmitting of MCG failure information and a reception of feedback information from the network side;
an elapsed time of the T316 at the reception of the feedback information from the network side after the transmitting of the MCG failure information;
a proportion or percentage of a time duration of the T316 accounted for by the elapsed time of the T316 at the reception of the feedback information from the network side after the transmitting of the MCG failure information;
whether the feedback from the network side is received prior to expiration of the T316;
whether the feedback from the network side is received at the expiration of the T316;
feedback information received prior to the expiration of the T316;
feedback information received at the expiration of the T316;
status information of a secondary cell group (SCG);
whether the UE is performing a procedure of conditional primary SCG (PSCell) change (CPC);
whether the UE is performing a procedure of conditional PSCell addition (CPA);
whether the UE has triggered CPC;
whether the UE has triggered CPA;
indication information indicating that the UE has performed a fast MCG link recovery in case that a re-establishment or handover occurs;
measurement information of a serving cell, a neighbor cell, and a target cell measured prior to the handover being initiated or during the handover in case that a handover command is received subsequent to the transmitting of the MCG failure information;
a reconfigured parameter in case that a reconfiguration command is received subsequent to the transmitting of the MCG failure information;
a measurement result of a master node (MN), the MCG, or a primary cell (PCell) in case that an RRC release command is received subsequent to the transmitting of the MCG failure information; and
indication information indicating that the measurement result exceeds a predetermined threshold in case that the RRC release command is received subsequent to the transmitting of the MCG failure information.

In an implementation, the configuring the fast master cell group link recovery based on the first information includes: in case that no feedback information is received from a network side at the expiration of T316, the UE has performed a re-establishment, and it is determined that the UE does not receive feedback from the network side due to the T316 being configured too short based on T316 configured by the network side, whether feedback from the network side is received prior to the expiration of the T316, whether the feedback from the network side is received at the expiration of the T316, indication information enabling the network side to be aware that the UE has performed a fast MCG link recovery in case that a re-establishment or handover occurs, and a measurement result of the UE, configuring the T316 to be longer.

In an implementation, the configuring the fast master cell group link recovery based on the first information includes: in case that no feedback information is received from a network side at the expiration of T316, the UE has performed a re-establishment, and it is determined that an SCG is in a deactivated state based on status information of the SCG, configuring the T316 to be longer such that the UE does not perform the re-establishment prematurely; and/or in case that no feedback information is received from the network side at the expiration of T316 and the UE has performed a re-establishment, configuring, based on information in an RLF detection related parameter used when an MCG failure is detected, a parameter for the UE to detect the MCG failure to be shorter to enable the UE to detect a potential RLF earlier.

In an implementation, the configuring the fast master cell group link recovery based on the first information includes: configuring T316 to be longer in case that it is determined that a time difference between an elapsed time of the T316 at the reception of the feedback information from the network side and an expiration of the T316 is within a predetermined duration based on a time difference between a transmitting of MCG failure information and a reception of feedback information from the network side, an elapsed time of the T316 at the reception of the feedback information from the network side after the transmitting of the MCG failure information, a proportion or percentage of a time duration of the T316 accounted for by the elapsed time of the T316 at the reception of the feedback information from the network side after the transmitting of the MCG failure information, a measurement result of the UE, and the T316 configured by the network side; or configuring the T316 to be shorter in case that it is determined that the time difference between the elapsed time of the T316 at the reception of the feedback information from the network side and the expiration of the T316 is longer than the predetermined duration.

In an implementation, the configuring the fast master cell group link recovery based on the first information includes: in case that it is determined that an MCG failure occurs during a procedure of CPC based on whether the UE is performing the procedure of CPC, whether the UE is performing a procedure of CPA, whether the UE has triggered CPC, whether the UE has triggered CPA, and indication information enabling the network side to be aware that the UE has performed a fast MCG link recovery in case that a re-establishment or handover occurs, configuring the CPC earlier.

In an implementation, the configuring the fast master cell group link recovery based on the first information includes: determining whether configuration information for a handover is reasonable based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that a handover command is received subsequent to the transmitting of the MCG failure information.

In an implementation, the configuring the fast master cell group link recovery based on the first information includes: according to whether the UE experiences an RLF or performs a re-establishment subsequently, determining whether a newly configured parameter is reasonable based on indication information enabling a network side to be aware that the UE has performed a fast MCG link recovery in case that a re-establishment or handover occurs, and a parameter reconfigured in case that a reconfiguration command is received subsequent to the transmitting of the MCG failure information.

In an implementation, the configuring the fast master cell group link recovery based on the first information includes: determining whether an RRC release command is appropriate based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that the RRC release command is received subsequent to the transmitting of the MCG failure information.

A UE is provided. The UE includes: a processor configured to read a program in a memory and perform the following step: reporting first information, the first information being information related to fast master cell group link recovery; and a transceiver configured to receive and transmit data under control of the processor.

In an implementation, the first information is obtained through one of or a combination of following manners: recording by the UE, recording by the UE according to a configuration by network administration, recording by the UE according to a configuration by a TCE, and recording by the UE according to a configuration by a base station.

In an implementation, the first information is reported in one of the following conditions: the UE being in a connected state, the UE being in a transition procedure to the connected state, the UE being transmitting an RRC re-establishment request message, and the UE being transmitting a radio link failure report.

In an implementation, the first information is reported under the request of a network side, or the first information is reported by the UE proactively, or the first information is reported under the request of the network side following the UE informing the network side of existence of relevant information.

In an implementation, the first information is one or more of following information:
T316 configured by a network side;
a radio link failure (RLF) detection related parameter used when a master cell group (MCG) failure is detected;
a time difference between a transmitting of MCG failure information and a reception of feedback information from the network side;
an elapsed time of the T316 at the reception of the feedback information from the network side after the transmitting of the MCG failure information;
a proportion or percentage of a time duration of the T316 accounted for by the elapsed time of the T316 at the reception of the feedback information from the network side after the transmitting of the MCG failure information;
whether the feedback from the network side is received prior to expiration of the T316;
whether the feedback from the network side is received at the expiration of the T316;
feedback information received prior to the expiration of the T316;
feedback information received at the expiration of the T316;
status information of a secondary cell group (SCG);
whether the UE is performing a procedure of conditional primary SCG (PSCell) change (CPC);
whether the UE is performing a procedure of conditional PSCell addition (CPA);
whether the UE has triggered CPC;
whether the UE has triggered CPA;
indication information indicating that the UE has performed a fast MCG link recovery in case that a re-establishment or handover occurs;
measurement information of a serving cell, a neighbor cell, and a target cell measured prior to the handover being initiated or during the handover in case that a handover command is received subsequent to the transmitting of the MCG failure information;
a reconfigured parameter in case that a reconfiguration command is received subsequent to the transmitting of the MCG failure information;
a measurement result of a master node (MN), the MCG, or a primary cell (PCell) in case that an RRC release command is received subsequent to the transmitting of the MCG failure information; and
indication information indicating that the measurement result exceeds a predetermined threshold in case that the RRC release command is received subsequent to the transmitting of the MCG failure information.

A UE is provided. The UE includes: a UE reporting module configured to report first information, the first information being information related to fast master cell group link recovery.

In an implementation, the UE reporting module is further configured to obtain the first information through one of or a combination of following manners: recording by the UE, recording by the UE according to a configuration by network administration, recording by the UE according to a configuration by a TCE, and recording by the UE according to a configuration by a base station.

In an implementation, the UE reporting module is further configured to report the first information in one of the following conditions: the UE being in a connected state, the UE being in a transition procedure to the connected state, the UE being transmitting an RRC re-establishment request message, and the UE being transmitting a radio link failure report.

In an implementation, the UE reporting module is further configured to report the first information under the request of the network side, report the first information proactively, or report the first information under the request of the network side subsequent to the UE informing the network side of existence of relevant information.

In an implementation, the UE reporting module is further configured to report the first information, which is one or more of following information: T316 configured by a network side; an RLF detection related parameter used when an MCG failure is detected; a time difference between a transmitting of MCG failure information and a reception of feedback information from the network side; an elapsed time of the T316 at the reception of the feedback information from the network side after the transmitting of the MCG failure information; a proportion or percentage of a time duration of the T316 accounted for by the elapsed time of the T316 at the reception of the feedback information from the network side after the transmitting of the MCG failure information; whether the feedback from the network side is received prior to expiration of the T316; whether the feedback from the network side is received at the expiration of the T316; feedback information received prior to the expiration of the T316; feedback information received at the expiration of the T316; status information of an SCG; whether the UE is performing a procedure of CPC; whether the UE is performing a procedure of CPA; indication information indicating that the UE has performed a fast MCG link recovery in case that a re-establishment or handover occurs; measurement information of a serving cell, a neighbor cell, and a target cell measured prior to the handover being initiated or during the handover in case that a handover command is received subsequent to the transmitting of the MCG failure information; a reconfigured parameter in case that a reconfiguration command is received subsequent to the transmitting of the MCG failure information; a measurement result of an MN, the MCG, or a PCell in case that an RRC release command is received subsequent to the transmitting of the MCG failure information; and indication information indicating that the measurement result exceeds a predetermined threshold in case that the RRC release command is received subsequent to the transmitting of the MCG failure information.

A base station is provided. The base station includes: a processor configured to read a program in a memory and perform the following steps: receiving first information reported by a UE, the first information being information related to fast master cell group link recovery; and configuring the fast master cell group link recovery based on the first information; and a transceiver configured to receive and transmit data under control of the processor.

In an implementation, the first information is obtained through one of or a combination of following manners: recording by the UE, recording by the UE according to a configuration by network administration, recording by the UE according to a configuration by a TCE, and recording by the UE according to a configuration by a base station.

In an implementation, the first information is reported in one of the following conditions: the UE being in a connected state, the UE being in a transition procedure to the connected state, the UE being transmitting an RRC re-establishment request message, and the UE being transmitting a radio link failure report.

In an implementation, the first information is reported under the request of a network side, or the first information is reported by the UE proactively, or the first information is reported under the request of the network side following the UE informing the network side of existence of relevant information.

In an implementation, the first information is one or more of:
T316 configured by a network side;
a radio link failure (RLF) detection related parameter used when a master cell group (MCG) failure is detected;
a time difference between a transmitting of MCG failure information and a reception of feedback information from the network side;
an elapsed time of the T316 at the reception of the feedback information from the network side after the transmitting of the MCG failure information;
a proportion or percentage of a time duration of the T316 accounted for by the elapsed time of the T316 at the reception of the feedback information from the network side after the transmitting of the MCG failure information;
whether the feedback from the network side is received prior to expiration of the T316;
whether the feedback from the network side is received at the expiration of the T316;
feedback information received prior to the expiration of the T316;
feedback information received at the expiration of the T316;
status information of a secondary cell group (SCG);
whether the UE is performing a procedure of conditional primary SCG (PSCell) change (CPC);
whether the UE is performing a procedure of conditional PSCell addition (CPA);
whether the UE has triggered CPC;
whether the UE has triggered CPA;
indication information indicating that the UE has performed a fast MCG link recovery in case that a re-establishment or handover occurs;
measurement information of a serving cell, a neighbor cell, and a target cell measured prior to the handover being initiated or during the handover in case that a handover command is received subsequent to the transmitting of the MCG failure information;
a reconfigured parameter in case that a reconfiguration command is received subsequent to the transmitting of the MCG failure information;
a measurement result of a master node (MN), the MCG, or a primary cell (PCell) in case that an RRC release command is received subsequent to the transmitting of the MCG failure information; and
indication information indicating that the measurement result exceeds a predetermined threshold in case that the RRC release command is received subsequent to the transmitting of the MCG failure information.

In an implementation, the configuring the fast master cell group link recovery based on the first information includes: in case that no feedback information is received from a network side at the expiration of T316, the UE has performed a re-establishment, and it is determined that the UE does not receive feedback from the network side due to the T316 being configured too short based on T316 configured by the network side, whether feedback from the network side is received prior to the expiration of the T316, whether the feedback from the network side is received at the expiration of the T316, indication information enabling the network side to be aware that the UE has performed a fast MCG link recovery in case that a re-establishment or handover occurs, and a measurement result of the UE, configuring the T316 to be longer.

In an implementation, the configuring the fast master cell group link recovery based on the first information includes: in case that no feedback information is received from a network side at the expiration of T316, the UE has performed a re-establishment, and it is determined that an SCG is in a deactivated state based on status information of the SCG, configuring the T316 to be longer such that the UE does not perform the re-establishment prematurely; and/or in case that no feedback information is received from the network side at the expiration of T316 and the UE has performed a re-establishment, configuring, based on information in an RLF detection related parameter used when an MCG failure is detected, a parameter for the UE to detect the MCG failure to be shorter to enable the UE to detect a potential RLF earlier.

In an implementation, the configuring the fast master cell group link recovery based on the first information includes: configuring T316 to be longer in case that it is determined that a time difference between an elapsed time of the T316 at the reception of the feedback information from the network side and an expiration of the T316 is within a predetermined duration based on a time difference between a transmitting of MCG failure information and a reception of feedback information from the network side, an elapsed time of the T316 at the reception of the feedback information from the network side after the transmitting of the MCG failure information, a proportion or percentage of a time duration of the T316 accounted for by the elapsed time of the T316 at the reception of the feedback information from the network side after the transmitting of the MCG failure information, a measurement result of the UE, and the T316 configured by the network side; or configuring the T316 to be shorter in case that it is determined that the time difference between the elapsed time of the T316 at the reception of the feedback information from the network side and the expiration of the T316 is longer than the predetermined duration.

In an implementation, the configuring the fast master cell group link recovery based on the first information includes: in case that it is determined that an MCG failure occurs during a procedure of CPC based on whether the UE is performing the procedure of CPC, whether the UE is performing a procedure of CPA, whether the UE has triggered CPC, whether the UE has triggered CPA, and indication information enabling the network side to be aware that the UE has performed a fast MCG link recovery in case that a re-establishment or handover occurs, configuring the CPC earlier.

In an implementation, the configuring the fast master cell group link recovery based on the first information includes: determining whether configuration information for a handover is reasonable based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that a handover command is received subsequent to the transmitting of the MCG failure information.

In an implementation, the configuring the fast master cell group link recovery based on the first information includes: according to whether the UE experiences an RLF or performs a re-establishment subsequently, determining whether a newly configured parameter is reasonable based on indication information enabling a network side to be aware that the UE has performed a fast MCG link recovery in case that a re-establishment or handover occurs, and a parameter reconfigured in case that a reconfiguration command is received subsequent to the transmitting of the MCG failure information.

In an implementation, the configuring the fast master cell group link recovery based on the first information includes: determining whether an RRC release command is appropriate based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that the RRC release command is received subsequent to the transmitting of the MCG failure information.

A base station is provided. The base station includes: a base station receiving module configured to receive first information reported by a UE, the first information being information related to fast master cell group link recovery; and a base station configuration module configured to configure the fast master cell group link recovery based on the first information.

In an implementation, the base station receiving module is further configured to receive the first information obtained through one of or a combination of following manners: recording by the UE, recording by the UE according to a configuration by network administration, recording by the UE according to a configuration by a TCE, and recording by the UE according to a configuration by a base station.

In an implementation, the base station receiving module is further configured to receive the first information reported in one of the following conditions: the UE being in a connected state, the UE being in a transition procedure to the connected state, the UE being transmitting an RRC re-establishment request message, and the UE being transmitting a radio link failure report.

In an implementation, the base station receiving module is further configured to receive the first information reported under the request of the network side, the first information reported by the UE proactively, or the first information reported under the request of the network side subsequent to the UE informing the network side of existence of relevant information.

In an implementation, the base station receiving module is further configured to receive the first information, which is one or more of following information: T316 configured by a network side; an RLF detection related parameter used when an MCG failure is detected; a time difference between a transmitting of MCG failure information and a reception of feedback information from the network side; an elapsed time of the T316 at the reception of the feedback information from the network side after the transmitting of the MCG failure information; a proportion or percentage of a time duration of the T316 accounted for by the elapsed time of the T316 at the reception of the feedback information from the network side after the transmitting of the MCG failure information; whether the feedback from the network side is received prior to expiration of the T316; whether the feedback from the network side is received at the expiration of the T316; feedback information received prior to the expiration of the T316; feedback information received at the expiration of the T316; status information of an SCG; whether the UE is performing a procedure of CPC; whether the UE is performing a procedure of CPA; indication information indicating that the UE has performed a fast MCG link recovery in case that a re-establishment or handover occurs; measurement information of a serving cell, a neighbor cell, and a target cell measured prior to the handover being initiated or during the handover in case that a handover command is received subsequent to the transmitting of the MCG failure information; a reconfigured parameter in case that a reconfiguration command is received subsequent to the transmitting of the MCG failure information; a measurement result of an MN, the MCG, or a PCell in case that an RRC release command is received subsequent to the transmitting of the MCG failure information; and indication information indicating that the measurement result exceeds a predetermined threshold in case that the RRC release command is received subsequent to the transmitting of the MCG failure information.

In the implementation, the base station configuration module being further configured to configure the fast master cell group link recovery based on the first information includes: in case that no feedback information is received from a network side at the expiration of T316, the UE has performed a re-establishment, and it is determined that the UE does not receive feedback from the network side due to the T316 being configured too short based on T316 configured by the network side, whether feedback from the network side is received prior to the expiration of the T316, whether the feedback from the network side is received at the expiration of the T316, indication information enabling the network side to be aware that the UE has performed a fast MCG link recovery in case that a re-establishment or handover occurs, and a measurement result of the UE, configuring the T316 to be longer.

In the implementation, the base station configuration module being further configured to configure the fast master cell group link recovery based on the first information includes: in case that no feedback information is received from a network side at the expiration of T316, the UE has performed a re-establishment, and it is determined that an SCG is in a deactivated state based on status information of the SCG, configuring the T316 to be longer such that the UE does not perform the re-establishment prematurely; and/or in case that no feedback information is received from the network side at the expiration of T316 and the UE has performed a re-establishment, configuring, based on information in an RLF detection related parameter used when an MCG failure is detected, a parameter for the UE to detect the MCG failure to be shorter to enable the UE to detect a potential RLF earlier.

In the implementation, the base station configuration module being further configured to configure the fast master cell group link recovery based on the first information includes: configuring T316 to be longer in case that it is determined that a time difference between an elapsed time of the T316 at the reception of the feedback information from the network side and an expiration of the T316 is within a predetermined duration based on a time difference between a transmitting of MCG failure information and a reception of feedback information from the network side, an elapsed time of the T316 at the reception of the feedback information from the network side after the transmitting of the MCG failure information, a proportion or percentage of a time duration of the T316 accounted for by the elapsed time of the T316 at the reception of the feedback information from the network side after the transmitting of the MCG failure information, a measurement result of the UE, and the T316 configured by the network side; or configuring the T316 to be shorter in case that it is determined that the time difference between the elapsed time of the T316 at the reception of the feedback information from the network side and the expiration of the T316 is longer than the predetermined duration.

In the implementation, the base station configuration module being further configured to configure the fast master cell group link recovery based on the first information includes: in case that it is determined that an MCG failure occurs during a procedure of CPC based on whether the UE is performing the procedure of CPC, whether the UE is performing a procedure of CPA, whether the UE has triggered CPC, whether the UE has triggered CPA, and indication information enabling the network side to be aware that the UE has performed a fast MCG link recovery in case that a re-establishment or handover occurs, configuring the CPC earlier.

In the implementation, the base station configuration module being further configured to configure the fast master cell group link recovery based on the first information includes: determining whether configuration information for a handover is reasonable based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that a handover command is received subsequent to the transmitting of the MCG failure information.

In the implementation, the base station configuration module being further configured to configure the fast master cell group link recovery based on the first information includes: according to whether the UE experiences an RLF or performs a re-establishment subsequently, determining whether a newly configured parameter is reasonable based on indication information enabling a network side to be aware that the UE has performed a fast MCG link recovery in case that a re-establishment or handover occurs, and a parameter reconfigured in case that a reconfiguration command is received subsequent to the transmitting of the MCG failure information.

In the implementation, the base station configuration module being further configured to configure the fast master cell group link recovery based on the first information includes: determining whether an RRC release command is appropriate based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that the RRC release command is received subsequent to the transmitting of the MCG failure information.

A computer-readable storage medium is provided. The computer-readable storage medium has a computer program stored thereon, wherein the computer program, when executed by a processor, implements the information transmitting method and the information receiving method described above.

The beneficial effects of the present disclosure are as follows.

In the technical solution provided by the embodiments of the present disclosure, since the UE will report the first information which is the information related to the fast master cell group link recovery, the network side can analyze whether the various configured parameters are reasonable and make corresponding optimizations. The base station can then configure the fast master cell group link recovery based on the first information, thereby assisting the UE to quickly resume its connection with the MCG and/or SCG, and enhancing the user experience

### BRIEF DESCRIPTION OF THE DRAWINGS

The accompanying drawings provided herein are intended to further the understanding of the present disclosure, and form a part of the present disclosure. The exemplary embodiments and illustrations provided herein are used to explain the present disclosure and are not to be construed as limiting the present disclosure. In the accompanying drawings:
FIG. 1 is a flow chart illustrating an information transmitting method on a UE side according to an embodiment of the present disclosure;
FIG. 2 is a flow chart illustrating an information receiving method on a base station side according to an embodiment of the present disclosure;
FIG. 3 is a schematic structural diagram of a UE according to an embodiment of the present disclosure; and
FIG. 4 is a schematic structural diagram of a base station according to an embodiment of the present disclosure.

### DETAILED DESCRIPTION

The inventor noticed during the invention process the following.

When a UE detects an MCG failure during a CPC procedure, the UE directly performs a re-establishment procedure.

When a secondary node (SN), an SCG, or a PSCell is in a deactivated state (hereinafter, "SCG deactivated" will refer to any of these three situations), the network side may also configure the UE to perform a fast MCG link recovery in response to the MCG failure. Compared to ordinary dual connection, when the SCG is deactivated, the UE must activate the SCG before reporting MCG error information through the SN. In order to perceive potential MCG failures more quickly, different parameters such as T310, N311 and T316 may be used in the SCG deactivated state.

After the terminal receives a reconfiguration command, a handover command, or an RRC release command from the MN, it may happen that after the reconfiguration (e.g., configuring a longer T310 and a less N311 etc.) takes effect, the MCG failure is still detected very soon (e.g., within a predetermined time period). Alternatively, a new MCG Failure may occur or the UE may be unable to establish an RRC connection with the target cell shortly after handing over to a new cell based on the handover command. Alternatively, after receiving the RRC release command, the UE detects that the signal quality of the MCG has recovered to a better level. Alternatively, the UE does not receive any information from the network side by the time the timer T316 expires (which may be due to the timer T316 being set too short, or the configuration performed by the MN being too slow, or poor signal quality of the SN, SCG, or PSCell which prevents successful transmission). In these cases, the UE initiates a re-establishment procedure, leading to a temporary loss of the RRC connection between the UE and the network side, and affecting data transmission and a service experience provided by the UE.

If the MCG Failure occurs when the SCG is in the deactivated state, the UE may not receive any feedback information from the network side by the time the T316 expires for the reason that the UE takes too much time to activate the SCG.

If the UE is able to report relevant information when the MCG failure occurs, such as the configuration of T310, N311 and T316, the SCG being in the deactivated state, the time taken to activate the SCG, the reception of RRC reconfiguration information by the UE, a target cell of a handover, and a measurement result, the reported information may facilitate the network side to analyze whether the parameters of the configuration are reasonable and perform corresponding optimization.

Based on this, in the technical solution provided by the embodiments of the present disclosure, a mechanism for the UE to report information related to the MCG failure is proposed, which assists the network side to perform a reasonable parameter configuration, assists the UE to quickly resume the connection with the MCG and/or the SCG, and improves the user experience.

Specific implementations of the present disclosure will be described below with reference to the accompanying drawings.

The implementation on the UE side and the implementation on the base station side will be described separately, and then an example in which the UE side and the base station side cooperate will be provided to better understand the implementation of the solution provided by the embodiments of the present disclosure. Such an explanation should not be construed as the two sides must be implemented in conjunction with each other or must be implemented separately. In fact, when the UE and the base station are implemented separately, they also solve the problems of the UE side and the base station side respectively, and when implementations on the two sides are used in combination, a better technical effect will be obtained.

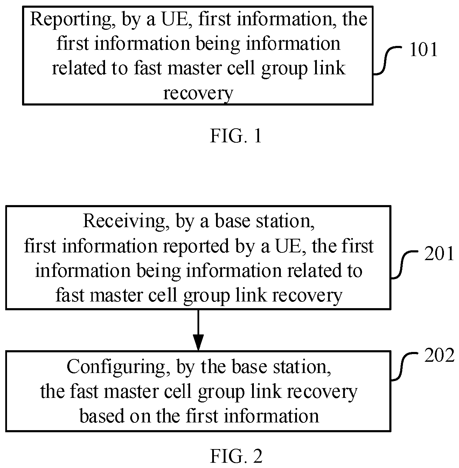

FIG. 1 is a flow chart illustrating an information transmitting method on a UE side. As shown in FIG. 1, the information transmitting method may include step 101.

At step 101, the UE reports first information, and the first information is information related to fast master cell group link recovery.

FIG. 2 is a flow chart illustrating an information receiving method on a base station side. As shown in FIG. 2, the information receiving method may include step 201 and step 202.

At step 201, a base station receives first information reported by a UE, and the first information is information related to fast master cell group link recovery.

At step 202, the base station configures the fast master cell group link recovery based on the first information.

In an implementation, the first information is obtained through one of or a combination of following manners: recording by the UE, recording by the UE according to a configuration by network administration, recording by the UE according to a configuration by a TCE, and recording by the UE according to a configuration by a base station.

Specifically, the information described above may be recorded by the UE proactively, or may be recorded and reported by the UE according to the configuration by the network administration, the TCE, or the base station.

In an implementation, the first information is reported in one of the following conditions: the UE being in a connected state, the UE being in a transition procedure to the connected state, the UE being transmitting an RRC re-establishment request message, and the UE being transmitting a radio link failure report.

Specifically, the UE reports the information in the connected state, or in the transition procedure to the connected state, or in the RRC re-establishment request message, or in the radio link failure report.

In an implementation, the reporting of the first information is at the request of the network side, or the first information is reported by the UE proactively, or the first information is reported under the request of the network side following the UE informing the network side of existence of relevant information.

Specifically, the reporting may be requested by the network side, or the first information may be reported by the UE proactively, or the first information is reported under the request of the network side after the UE informs the network side of existence of relevant information.

In an implementation, the first information is one or more of following information:
T316 configured by a network side;
a radio link failure (RLF) detection related parameter used when a master cell group (MCG) failure is detected;
a time difference between a transmitting of MCG failure information and a reception of feedback information from the network side;
an elapsed time of the T316 at the reception of the feedback information from the network side after the transmitting of the MCG failure information;
a proportion or percentage of a time duration of the T316 accounted for by the elapsed time of the T316 at the reception of the feedback information from the network side after the transmitting of the MCG failure information;
whether the feedback from the network side is received prior to expiration of the T316;
whether the feedback from the network side is received at the expiration of the T316;
feedback information received prior to the expiration of the T316;
feedback information received at the expiration of the T316;
status information of a secondary cell group (SCG);
whether the UE is performing a procedure of conditional primary SCG (PSCell) change (CPC);
whether the UE is performing a procedure of conditional PSCell addition (CPA);
whether the UE has triggered CPC;
whether the UE has triggered CPA;
indication information indicating that the UE has performed a fast MCG link recovery in case that a re-establishment or handover occurs;
measurement information of a serving cell, a neighbor cell, and a target cell measured prior to the handover being initiated or during the handover in case that a handover command is received subsequent to the transmitting of the MCG failure information;
a reconfigured parameter in case that a reconfiguration command is received subsequent to the transmitting of the MCG failure information;
a measurement result of a master node (MN), the MCG, or a primary cell (PCell) in case that an RRC release command is received subsequent to the transmitting of the MCG failure information; and
indication information indicating that the measurement result exceeds a predetermined threshold in case that the RRC release command is received subsequent to the transmitting of the MCG failure information.

Specifically, the information related to fast MCG link recovery reported by the UE will be described below.
A) T316 configured by the network side (i.e., the maximum duration of the timer T316 which starts upon transmitting the MCG failure information), which may be indicated in terms of time duration or indicated by bits. For example, the T316 may be configured with 10 values, and 0000 represents a first configuration.
B) RLF detection related parameter used when the MCG failure is detected, for example, one or more of T310, N311, or a radio link control (RLC) maximum retransmission count (an representation method of the parameters is the same as that of the T316).
C) Time difference between the transmitting of MCG failure information and the reception of feedback information from the network side, or the elapsed time of the T316 at the reception of feedback information from the network side, or the proportion or percentage of a time duration of the T316 accounted for by the elapsed time of the T316 at the reception of the feedback information from the network side.
D) Whether the feedback from the network side is received prior to or at the expiration of the T316.
E) The feedback information received prior to or at the expiration of the T316, such as RRC reconfiguration, or handover, or RRC release.
F) The status information of the SCG, such as deactivated, or whether it is deactivated.
G) Whether the UE is performing the procedure of CPC or CPA, or whether the UE has triggered CPC or CPA.
H) The indication information of the fast MCG link recovery is added in a related report information, such as a re-establishment or handover success report or an RLF report, in case that a re-establishment or handover occurs, such that the network side is aware that the UE has performed the fast MCG link recovery.
I) The measurement information of the serving cell, the neighbor cell, and the target cell measured prior to the handover being initiated or during the handover in case that a handover command is received subsequent to the transmitting of the MCG failure information.
J) Reconfigured parameters in case that the reconfiguration command is received subsequent to the transmitting of the MCG failure information, such as new T310 and T316; optionally, values of the parameters.
K) The measurement result of the MN, the MCG, or the PCell in case that the RRC release command is received subsequent to the transmitting of the MCG failure information, or the indication information indicating that the measurement result of the MN, the MCG, or the PCell exceeds a predetermined threshold.

After the network side (source MCG) obtains the data information reported by the terminal, it can optimize the related configuration of the fast master cell group link recovery based on the data information in combination with other information such as RLF report, UE location, and measurement results. An implementation of configuring the fast master cell group link recovery based on the first information will be described below.
1) In case that no feedback information is received from a network side at the expiration of T316, the UE has performed a re-establishment, and it is determined that the UE does not receive feedback from the network side due to the T316 being configured too short based on T316 configured by the network side, whether feedback from the network side is received prior to the expiration of the T316, whether the feedback from the network side is received at the expiration of the T316, indication information enabling the network side to be aware that the UE has performed a fast MCG link recovery in case that a re-establishment or handover occurs, and a measurement result of the UE, the T316 is configured to be longer.
   Specifically, in case that no feedback information is received from the network side at the expiration of T316 and the UE has performed a re-establishment, the network side determines, based on the aforementioned information A, D, and H, and the measurement result information of the UE, whether the T316 has been configured too short (especially when the measurement result of the MN, MCG, or PCell is satisfactory), resulting in the UE not receiving the feedback from the network side. Then, the base station may subsequently consider configuring the T316 to be longer.
2) In case that no feedback information is received from a network side at the expiration of T316, the UE has performed a re-establishment, and it is determined that an SCG is in a deactivated state based on the status information of the SCG, the T316 is configured to be longer such that the UE does not perform the re-establishment prematurely; and/or in case that no feedback information is received from the network side at the expiration of T316 and the UE has performed a re-establishment, based on information in an RLF detection related parameter used when an MCG failure is detected, a parameter for the UE to detect the MCG failure is configured to be shorter to enable the UE to detect a potential RLF earlier.
   Specifically, in case that no feedback information is received from the network side at the expiration of T316, the UE has performed a re-establishment, and the SCG is in the deactivated state at that time according to information of the information F, since it takes a period of time for the SCG to be activated, the network side may subsequently consider configuring the T316 to be longer to prevent the UE from initiating the re-establishment too early; and/or in case that no feedback information is received from the network side at the expiration of T316, and the UE has performed a re-establishment, according to information of the information B, the network side may configure the parameter for the UE to detect the MCG failure, such as T310, N311, or the maximum RLC retransmission number, to be shorter to enable the UE to detect the potential RLF earlier.
3) Based on a time difference between a transmitting of MCG failure information and a reception of feedback information from the network side, an elapsed time of the T316 at the reception of the feedback information from the network side after the transmitting of the MCG failure information, a proportion or percentage of a time duration of the T316 accounted for by the elapsed time of the T316 at the reception of the feedback information from the network side after the transmitting of the MCG failure information, a measurement result of the UE, and the T316 configured by the network side, if it is determined that a time difference between an elapsed time of the T316 at the reception of the feedback information from the network side and an expiration of the T316 is within a predetermined duration, the T316 is configured to be longer, or if it is determined that the time difference between the elapsed time of the T316 at the reception of the feedback information from the network side and the expiration of the T316 is longer than a predetermined duration, the T316 is configured to be shorter.
   Specifically, according to the information C (the elapsed time of the T316 when the feedback information is received from the network side) and the measurement result of the UE, and the information A (the configured duration of the T316), the network side may determine whether it is necessary to configure a longer T316 (if the elapsed time of the T316 is very long and close to expiration when the feedback is received from the network side), or to configure a shorter T316 (if the elapsed time of the T316 is very short when the feedback is received from the network side, and the T316 would not expire until a long time elapses).
4) In case that it is determined that an MCG failure occurs during a procedure of CPC based on whether the UE is performing the procedure of CPC, whether the UE is performing a procedure of CPA, whether the UE has triggered CPC, whether the UE has triggered CPA, and indication information enabling the network side to be aware that the UE has performed a fast MCG link recovery in case that a re-establishment or handover occurs, the CPC is configured earlier.
   Specifically, based on information of the information G and H, the network side may determine that the MCG failure occurred during the procedure of CPC, which indicates that the timing of configuring the CPC was too late and that the CPC needs to be configured earlier.
5) Whether configuration information for a handover is reasonable is determined based on the indication information enabling the network side to be aware that the UE has performed the fast MCG link recovery in case that the re-establishment or handover occurs, and measurement information of a serving cell, a neighbor cell, and a target cell measured prior to the handover being initiated or during the handover in case that a handover command is received subsequent to the transmitting of the MCG failure information.
   Specifically, according to information of the information H and I, the network side may determine whether the configuration information for the handover is reasonable. For example, whether a selected target frequency or cell for the handover is reasonable, and the like.
6) According to whether the UE experiences an RLF or performs a re-establishment subsequently, whether a newly configured parameter is reasonable is determined based on indication information enabling a network side to be aware that the UE has performed a fast MCG link recovery in case that a re-establishment or handover occurs, and a parameter reconfigured in case that a reconfiguration command is received subsequent to the transmitting of the MCG failure information.
   Specifically, according to information of the information H and J, the network side may, according to whether the UE experiences the RLF or performs the re-establishment subsequently, determine whether the newly configured parameter is reasonable. For example, after reconfiguring a longer T310 and/or a longer T316, the UE experiences an RLF in the MCG.
7) Whether an RRC release command is appropriate is determined based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that a handover command is received subsequent to the transmitting of the MCG failure information.
   Specifically, according to information of the information H and I, the network side may determine whether the RRC release command is appropriate. For example, the quality of the MN, MCG, or PCell measured by the UE being satisfactory (e.g., when the measurement result exceeds a predetermined threshold) indicates that the link of the MCG is resumed, then the MCG should not be released. Additionally, T310, N311, or the maximum RLC retransmission number is configured.

Based on the same inventive concept, embodiments of the present disclosure further provide a base station, a user equipment, and a computer-readable storage medium. Since the principle of solving problems by these devices is similar to the information receiving method and the information transmitting method, for the implementations of these devices, references may be made to the implementations of the methods, and a repeated description is omitted.

When implementing the technical solution provided by the embodiments of the present disclosure, the technical solution may be implemented as follows.

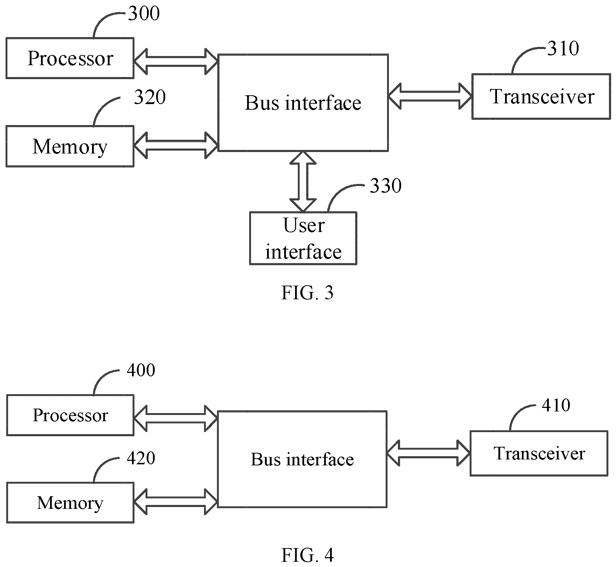

FIG. 3 is a schematic structural diagram of a UE. As shown in FIG. 3, the UE includes:
a processor 300, configured to read a program in a memory 320 and perform the following step: reporting first information, the first information being information related to fast master cell group link recovery;
a transceiver 310, configured to receive and transmit data under the control of the processor 300.

In an implementation, the first information is obtained through one of or a combination of following manners: recording by the UE, recording by the UE according to a configuration by network administration, recording by the UE according to a configuration by a TCE, and recording by the UE according to a configuration by a base station.

In an implementation, the first information is reported in one of the following conditions: the UE being in a connected state, the UE being in a transition procedure to the connected state, the UE being transmitting an RRC re-establishment request message, and the UE being transmitting a radio link failure report.

In an implementation, the first information is reported under the request of the network side, or the first information is reported by the UE proactively, or the first information is reported under the request of the network side following the UE informing the network side of existence of relevant information.

In an implementation, the first information is one or more of:
T316 configured by a network side;
a radio link failure (RLF) detection related parameter used when a master cell group (MCG) failure is detected;
a time difference between a transmitting of MCG failure information and a reception of feedback information from the network side;
an elapsed time of the T316 at the reception of the feedback information from the network side after the transmitting of the MCG failure information;
a proportion or percentage of a time duration of the T316 accounted for by the elapsed time of the T316 at the reception of the feedback information from the network side after the transmitting of the MCG failure information;
whether the feedback from the network side is received prior to expiration of the T316;
whether the feedback from the network side is received at the expiration of the T316;
feedback information received prior to the expiration of the T316;
feedback information received at the expiration of the T316;
status information of a secondary cell group (SCG);
whether the UE is performing a procedure of conditional primary SCG (PSCell) change (CPC);
whether the UE is performing a procedure of conditional PSCell addition (CPA);
whether the UE has triggered CPC;
whether the UE has triggered CPA;
indication information indicating that the UE has performed a fast MCG link recovery in case that a re-establishment or handover occurs;
measurement information of a serving cell, a neighbor cell, and a target cell measured prior to the handover being initiated or during the handover in case that a handover command is received subsequent to the transmitting of the MCG failure information;
a reconfigured parameter in case that a reconfiguration command is received subsequent to the transmitting of the MCG failure information;
a measurement result of a master node (MN), the MCG, or a primary cell (PCell) in case that an RRC release command is received subsequent to the transmitting of the MCG failure information; and
indication information indicating that the measurement result exceeds a predetermined threshold in case that the RRC release command is received subsequent to the transmitting of the MCG failure information.

In FIG. 3, a bus architecture may include any number of interconnected buses and bridges. Specifically, the bus architecture may link together various circuits, such as one or more processors represented by the processor 300 and a memory represented by the memory 320. The bus architecture may also link together various other circuits, such as a peripheral device, a voltage regulator, and a power management circuit. These are well known in the related art and are therefore not further described herein. The bus interface provides an interface. The transceiver 310 may be a plurality of elements, i.e., the transceiver 310 may include a transmitter and a receiver, providing units for communicating with various other apparatuses on a transmission medium. For different UEs, the user interface 330 may also be an interface capable of externally and internally connecting required devices, and the connected devices include, but are not limited to, a keypad, a display, a speaker, a microphone, a joystick, and the like.

The processor 300 is responsible for managing the bus architecture and general processing, and the memory 320 may store data used by the processor 300 in performing operations.

An embodiment of the present disclosure also provides a UE. The UE includes: a UE reporting module configured to report first information, the first information being information related to fast master cell group link recovery.

In an implementation, the UE reporting module is further configured to obtain the first information through one of or a combination of following manners: recording by the UE, recording by the UE according to a configuration by network administration, recording by the UE according to a configuration by a TCE, and recording by the UE according to a configuration by a base station.

In an implementation, the UE reporting module is further configured to report the first information in one of the following conditions: the UE being in a connected state, the UE being in a transition procedure to the connected state, the UE being transmitting an RRC re-establishment request message, and the UE being transmitting a radio link failure report.

In an implementation, the UE reporting module is further configured to report the first information under the request of the network side, report the first information proactively, or report the first information under the request of the network side subsequent to the UE informing the network side of existence of relevant information.

In an implementation, the UE reporting module is further configured to report the first information, which is one or more of following information: T316 configured by a network side; an RLF detection related parameter used when an MCG failure is detected; a time difference between a transmitting of MCG failure information and a reception of feedback information from the network side; an elapsed time of the T316 at the reception of the feedback information from the network side after the transmitting of the MCG failure information; a proportion or percentage of a time duration of the T316 accounted for by the elapsed time of the T316 at the reception of the feedback information from the network side after the transmitting of the MCG failure information; whether the feedback from the network side is received prior to expiration of the T316; whether the feedback from the network side is received at the expiration of the T316; feedback information received prior to the expiration of the T316; feedback information received at the expiration of the T316; status information of an SCG; whether the UE is performing a procedure of CPC; whether the UE is performing a procedure of CPA; indication information indicating that the UE has performed a fast MCG link recovery in case that a re-establishment or handover occurs; measurement information of a serving cell, a neighbor cell, and a target cell measured prior to the handover being initiated or during the handover in case that a handover command is received subsequent to the transmitting of the MCG failure information; a reconfigured parameter in case that a reconfiguration command is received subsequent to the transmitting of the MCG failure information; a measurement result of an MN, the MCG, or a PCell in case that an RRC release command is received subsequent to the transmitting of the MCG failure information; and indication information indicating that the measurement result exceeds a predetermined threshold in case that the RRC release command is received subsequent to the transmitting of the MCG failure information.

For convenience of description, various parts of the apparatus are divided into various modules or units in terms of functionality and are described separately. Of course, when implementing the present disclosure, the functions of various modules or units may be implemented within a same piece or a plurality pieces of software or hardware.

FIG. 4 is a schematic structural diagram of a base station. As shown in FIG. 4, the base station includes the following:
a processor 400, configured to read a program in a memory 420 and perform following steps: receiving first information reported by a UE, the first information being information related to fast master cell group link recovery; and configuring the fast master cell group link recovery based on the first information;
a transceiver 410, configured to receive and transmit data under the control of the processor 400.

In an implementation, the first information is obtained through one of or a combination of following manners: recording by the UE, recording by the UE according to a configuration by network administration, recording by the UE according to a configuration by a TCE, and recording by the UE according to a configuration by a base station.

In an implementation, the first information is reported in one of the following conditions: the UE being in a connected state, the UE being in a transition procedure to the connected state, the UE being transmitting an RRC re-establishment request message, and the UE being transmitting a radio link failure report.

In an implementation, the first information is reported under the request of the network side, or the first information is reported by the UE proactively, or the first information is reported under the request of the network side following the UE informing the network side of existence of relevant information.

In an implementation, the first information is one or more of:
T316 configured by a network side;
a radio link failure (RLF) detection related parameter used when a master cell group (MCG) failure is detected;
a time difference between a transmitting of MCG failure information and a reception of feedback information from the network side;
an elapsed time of the T316 at the reception of the feedback information from the network side after the transmitting of the MCG failure information;
a proportion or percentage of a time duration of the T316 accounted for by the elapsed time of the T316 at the reception of the feedback information from the network side after the transmitting of the MCG failure information;
whether the feedback from the network side is received prior to expiration of the T316;
whether the feedback from the network side is received at the expiration of the T316;
feedback information received prior to the expiration of the T316;
feedback information received at the expiration of the T316;
status information of a secondary cell group (SCG);
whether the UE is performing a procedure of conditional primary SCG (PSCell) change (CPC);
whether the UE is performing a procedure of conditional PSCell addition (CPA);
whether the UE has triggered CPC;
whether the UE has triggered CPA;
indication information indicating that the UE has performed a fast MCG link recovery in case that a re-establishment or handover occurs;
measurement information of a serving cell, a neighbor cell, and a target cell measured prior to the handover being initiated or during the handover in case that a handover command is received subsequent to the transmitting of the MCG failure information;
a reconfigured parameter in case that a reconfiguration command is received subsequent to the transmitting of the MCG failure information;
a measurement result of a master node (MN), the MCG, or a primary cell (PCell) in case that an RRC release command is received subsequent to the transmitting of the MCG failure information; and
indication information indicating that the measurement result exceeds a predetermined threshold in case that the RRC release command is received subsequent to the transmitting of the MCG failure information.

In an implementation, the configuring the fast master cell group link recovery based on the first information includes: in case that no feedback information is received from a network side at the expiration of T316, the UE has performed a re-establishment, and it is determined that the UE does not receive feedback from the network side due to the T316 being configured too short based on T316 configured by the network side, whether feedback from the network side is received prior to the expiration of the T316, whether the feedback from the network side is received at the expiration of the T316, indication information enabling the network side to be aware that the UE has performed a fast MCG link recovery in case that a re-establishment or handover occurs, and a measurement result of the UE, configuring the T316 to be longer.

In an implementation, the configuring the fast master cell group link recovery based on the first information includes: in case that no feedback information is received from a network side at the expiration of T316, the UE has performed a re-establishment, and it is determined that an SCG is in a deactivated state based on status information of the SCG, configuring the T316 to be longer such that the UE does not perform the re-establishment prematurely; and/or in case that no feedback information is received from the network side at the expiration of T316 and the UE has performed a re-establishment, configuring, based on information in an RLF detection related parameter used when an MCG failure is detected, a parameter for the UE to detect the MCG failure to be shorter to enable the UE to detect a potential RLF earlier.

In an implementation, the configuring the fast master cell group link recovery based on the first information includes: configuring T316 to be longer in case that it is determined that a time difference between an elapsed time of the T316 at the reception of the feedback information from the network side and an expiration of the T316 is within a predetermined duration based on a time difference between a transmitting of MCG failure information and a reception of feedback information from the network side, an elapsed time of the T316 at the reception of the feedback information from the network side after the transmitting of the MCG failure information, a proportion or percentage of a time duration of the T316 accounted for by the elapsed time of the T316 at the reception of the feedback information from the network side after the transmitting of the MCG failure information, a measurement result of the UE, and the T316 configured by the network side; or configuring the T316 to be shorter in case that it is determined that the time difference between the elapsed time of the T316 at the reception of the feedback information from the network side and the expiration of the T316 is longer than the predetermined duration.

In an implementation, the configuring the fast master cell group link recovery based on the first information includes: in case that it is determined that an MCG failure occurs during a procedure of CPC based on whether the UE is performing the procedure of CPC, whether the UE is performing a procedure of CPA, whether the UE has triggered CPC, whether the UE has triggered CPA, and indication information enabling the network side to be aware that the UE has performed a fast MCG link recovery in case that a re-establishment or handover occurs, configuring the CPC earlier.

In an implementation, the configuring the fast master cell group link recovery based on the first information includes: determining whether configuration information for a handover is reasonable based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that a handover command is received subsequent to the transmitting of the MCG failure information.

In an implementation, the configuring the fast master cell group link recovery based on the first information includes: according to whether the UE experiences an RLF or performs a re-establishment subsequently, determining whether a newly configured parameter is reasonable based on indication information enabling a network side to be aware that the UE has performed a fast MCG link recovery in case that a re-establishment or handover occurs, and a parameter reconfigured in case that a reconfiguration command is received subsequent to the transmitting of the MCG failure information.

In an implementation, the configuring the fast master cell group link recovery based on the first information includes: determining whether an RRC release command is appropriate based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that the RRC release command is received subsequent to the transmitting of the MCG failure information.

In FIG. 4, a bus architecture may include any number of interconnected buses and bridges. Specifically, the bus architecture may link together various circuits, such as one or more processors represented by the processor 400 and a memory represented by the memory 420. The bus architecture may also link together various other circuits, such as a peripheral device, a voltage regulator, and a power management circuit. These are well known in the related art and are therefore not further described herein. The bus interface provides an interface. The transceiver 410 may be a plurality of elements, i.e., the transceiver 410 may include a transmitter and a receiver, providing units for communicating with various other apparatuses on a transmission medium. The processor 400 is responsible for managing the bus architecture and general processing, and the memory 420 may store data used by the processor 400 in performing operations.

An embodiment of the present disclosure also provides a base station. The base station includes: a base station receiving module configured to receive first information reported by a UE, the first information being information related to fast master cell group link recovery; and a base station configuration module configured to configure the fast master cell group link recovery based on the first information.

In an implementation, the base station receiving module is further configured to receive the first information obtained through one of or a combination of following manners: recording by the UE, recording by the UE according to a configuration by network administration, recording by the UE according to a configuration by a TCE, and recording by the UE according to a configuration by a base station.

In an implementation, the base station receiving module is further configured to receive the first information reported in one of the following conditions: the UE being in a connected state, the UE being in a transition procedure to the connected state, the UE being transmitting an RRC re-establishment request message, and the UE being transmitting a radio link failure report.

In an implementation, the base station receiving module is further configured to receive the first information reported under the request of the network side, the first information reported by the UE proactively, or the first information reported under the request of the network side subsequent to the UE informing the network side of existence of relevant information.

In an implementation, the base station receiving module is further configured to receive the first information, which is one or more of: T316 configured by a network side; an RLF detection related parameter used when an MCG failure is detected; a time difference between a transmitting of MCG failure information and a reception of feedback information from the network side; an elapsed time of the T316 at the reception of the feedback information from the network side after the transmitting of the MCG failure information; a proportion or percentage of a time duration of the T316 accounted for by the elapsed time of the T316 at the reception of the feedback information from the network side after the transmitting of the MCG failure information; whether the feedback from the network side is received prior to expiration of the T316; whether the feedback from the network side is received at the expiration of the T316; feedback information received prior to the expiration of the T316; feedback information received at the expiration of the T316; status information of an SCG; whether the UE is performing a procedure of CPC; whether the UE is performing a procedure of CPA; indication information indicating that the UE has performed a fast MCG link recovery in case that a re-establishment or handover occurs; measurement information of a serving cell, a neighbor cell, and a target cell measured prior to the handover being initiated or during the handover in case that a handover command is received subsequent to the transmitting of the MCG failure information; a reconfigured parameter in case that a reconfiguration command is received subsequent to the transmitting of the MCG failure information; a measurement result of an MN, the MCG, or a PCell in case that an RRC release command is received subsequent to the transmitting of the MCG failure information; and indication information indicating that the measurement result exceeds a predetermined threshold in case that the RRC release command is received subsequent to the transmitting of the MCG failure information.

In the implementation, the base station configuration module being further configured to configure the fast master cell group link recovery based on the first information includes: in case that no feedback information is received from a network side at the expiration of T316, the UE has performed a re-establishment, and it is determined that the UE does not receive feedback from the network side due to the T316 being configured too short based on T316 configured by the network side, whether feedback from the network side is received prior to the expiration of the T316, whether the feedback from the network side is received at the expiration of the T316, indication information enabling the network side to be aware that the UE has performed a fast MCG link recovery in case that a re-establishment or handover occurs, and a measurement result of the UE, configuring the T316 to be longer.

In the implementation, the base station configuration module being further configured to configure the fast master cell group link recovery based on the first information includes: in case that no feedback information is received from a network side at the expiration of T316, the UE has performed a re-establishment, and it is determined that an SCG is in a deactivated state based on status information of the SCG, configuring the T316 to be longer such that the UE does not perform the re-establishment prematurely; and/or in case that no feedback information is received from the network side at the expiration of T316 and the UE has performed a re-establishment, configuring, based on information in an RLF detection related parameter used when an MCG failure is detected, a parameter for the UE to detect the MCG failure to be shorter to enable the UE to detect a potential RLF earlier.

In the implementation, the base station configuration module being further configured to configure the fast master cell group link recovery based on the first information includes: configuring T316 to be longer in case that it is determined that a time difference between an elapsed time of the T316 at the reception of the feedback information from the network side and an expiration of the T316 is within a predetermined duration based on a time difference between a transmitting of MCG failure information and a reception of feedback information from the network side, an elapsed time of the T316 at the reception of the feedback information from the network side after the transmitting of the MCG failure information, a proportion or percentage of a time duration of the T316 accounted for by the elapsed time of the T316 at the reception of the feedback information from the network side after the transmitting of the MCG failure information, a measurement result of the UE, and the T316 configured by the network side; or configuring the T316 to be shorter in case that it is determined that the time difference between the elapsed time of the T316 at the reception of the feedback information from the network side and the expiration of the T316 is longer than the predetermined duration.

In the implementation, the base station configuration module being further configured to configure the fast master cell group link recovery based on the first information includes: in case that it is determined that an MCG failure occurs during a procedure of CPC based on whether the UE is performing the procedure of CPC, whether the UE is performing a procedure of CPA, whether the UE has triggered CPC, whether the UE has triggered CPA, and indication information enabling the network side to be aware that the UE has performed a fast MCG link recovery in case that a re-establishment or handover occurs, configuring the CPC earlier.

In the implementation, the base station configuration module being further configured to configure the fast master cell group link recovery based on the first information includes: determining whether configuration information for a handover is reasonable based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that a handover command is received subsequent to the transmitting of the MCG failure information.

In the implementation, the base station configuration module being further configured to configure the fast master cell group link recovery based on the first information includes: according to whether the UE experiences an RLF or performs a re-establishment subsequently, determining whether a newly configured parameter is reasonable based on indication information enabling a network side to be aware that the UE has performed a fast MCG link recovery in case that a re-establishment or handover occurs, and a parameter reconfigured in case that a reconfiguration command is received subsequent to the transmitting of the MCG failure information.

In the implementation, the base station configuration module being further configured to configure the fast master cell group link recovery based on the first information includes: determining whether an RRC release command is appropriate based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that the RRC release command is received subsequent to the transmitting of the MCG failure information.

For convenience of description, various parts of the apparatus are divided into various modules or units in terms of functionality and are described separately. Of course, when implementing the present disclosure, the functions of various modules or units may be implemented within a same piece or a plurality pieces of software or hardware.

An embodiment of the present disclosure also provides a computer-readable storage medium. The computer-readable storage medium has a computer program stored thereon, in which the computer program, when executed by a processor, implements the information transmitting method and the information receiving method described above.

For specific implementation, references may be made to the implementations of the information transmitting method and/or the information receiving method.

In summary, in the technical solution provided by the embodiments of the present disclosure, the mechanism for the UE to report the information related to the MCG failure is proposed, which assists the network side to perform reasonable parameter configuration, assists the UE to quickly resume the connection with the MCG and/or the SCG, and improves the user experience.

Those skilled in the art will appreciate that the embodiments of the present disclosure may be provided as a method, a system, or a computer program product. Accordingly, the present disclosure may take the form of an entirely hardware embodiment, an entirely software embodiment, or an embodiment combining software and hardware aspects. Further, the present disclosure may take the form of a computer program product embodied on one or more computer-usable storage media (including but not limited to a magnetic disk storage and an optical storage, etc.) having computer-usable program codes stored therein.

The present disclosure has been described with reference to flowcharts and/or block diagrams of the method, the device (system), and the computer program product according to the embodiments of the present disclosure. It should be understood that each flow and/or block of the flowcharts and/or block diagrams, and combinations of flows and/or blocks in the flowcharts and/or block diagrams, may be implemented by computer program instructions. These computer program instructions may be provided to a processor of a general purpose computer, a special purpose computer, an embedded processor, or other programmable data processing device to produce a machine such that the instructions executed by the processor of the computer or other programmable data processing device generate an apparatus for realizing the functions specified in one or more flows of the flowcharts and/or one or more blocks of the block diagrams.

These computer program instructions may also be stored in a computer-readable memory that can direct a computer or other programmable data processing device to operate in a specific manner such that the instructions stored in the computer-readable memory produce an article of manufacture including instruction means which implement the functions specified in one or more flows of the flowcharts and/or one or more blocks of the block diagrams

These computer program instructions may also be loaded to a computer or other programmable data processing device, enabling a series of operational steps to be executed on the computer or other programmable devices to produce computer-implemented processing, such that the instructions executed on the computer or other programmable devices provide steps for implementing the functions specified in one or more flows of the flowcharts and/or one or more blocks of the block diagrams.

It is to be understood that the embodiments described in the present disclosure may be implemented in hardware, software, firmware, middleware, microcode, or a combination thereof. For hardware implementation, a module, a unit, a sub-module, a sub-unit, etc. may be implemented in one or more application specific integrated circuits (ASICs), a digital signal processor (DSP), a digital signal processing device (DSPD), a programmable logic device (PLD), a field-programmable gate array (FPGA), a general-purpose processor, a controller, a microcontroller, a microprocessor, other electronic units for performing the functions described in the present disclosure, or combinations thereof.

It will be apparent that those skilled in the art can make various modifications and variations to the present disclosure without departing from the spirit and scope of the present disclosure. Thus, if such modifications and variations of the present disclosure fall within the scope of the claims of the present disclosure and their equivalents, it is intended that the present disclosure also encompass such modifications and variations.

## Claims

1. An information transmitting method, comprising:
reporting, by a user equipment (UE), first information, the first information being information related to fast master cell group (MCG) link recovery.

2. The method according to claim 1, wherein the first information is obtained through one of or a combination of following manners:
recording by the UE,
recording by the UE according to a configuration by network administration,
recording by the UE according to a configuration by a trace collection entity (TCE), and
recording by the UE according to a configuration by a base station.

3. The method according to claim 1, wherein the first information is reported in one of the following conditions:
the UE being in a connected state,
the UE being in a transition procedure to the connected state,
the UE being transmitting a radio resource control (RRC) re-establishment request message, and
the UE being transmitting a radio link failure report.

4. The method according to claim 1, wherein the first information is reported under the request of a network side, or
the first information is reported by the UE proactively, or
the first information is reported under the request of the network side following the UE informing the network side of existence of relevant information.

5. The method according to any one of claims 1 to 4, wherein the first information is one or more of:
T316 configured by a network side;
a radio link failure (RLF) detection related parameter used when an MCG failure is detected;
a time difference between a transmitting of MCG failure information and a reception of feedback information from the network side;
an elapsed time of the T316 at the reception of the feedback information from the network side after the transmitting of the MCG failure information;
a proportion or percentage of a time duration of the T316 accounted for by the elapsed time of the T316 at the reception of the feedback information from the network side after the transmitting of the MCG failure information;
whether a feedback from the network side is received prior to expiration of the T316;
whether the feedback from the network side is received at the expiration of the T316;
feedback information received prior to the expiration of the T316;
feedback information received at the expiration of the T316;
status information of a secondary cell group (SCG);
whether the UE is performing a procedure of conditional PSCell change (CPC);
whether the UE is performing a procedure of conditional PSCell addition (CPA);
whether the UE has triggered CPC;
whether the UE has triggered CPA;
indication information indicating that the UE has performed a fast MCG link recovery, in case that a re-establishment or handover occurs;
measurement information of a serving cell, a neighbor cell, and a target cell measured prior to the handover being initiated or during the handover, in case that a handover command is received subsequent to the transmitting of the MCG failure information;
a reconfigured parameter, in case that a reconfiguration command is received subsequent to the transmitting of the MCG failure information;
a measurement result of a master node (MN), the MCG, or a primary cell (PCell), in case that an RRC release command is received subsequent to the transmitting of the MCG failure information; and
indication information indicating that the measurement result exceeds a predetermined threshold, in case that the RRC release command is received subsequent to the transmitting of the MCG failure information.

6. An information receiving method, comprising:
receiving, by a base station, first information reported by a UE, the first information being information related to fast master cell group link recovery; and
configuring, by the base station, the fast master cell group link recovery based on the first information.

7. The method according to claim 6, wherein the first information is obtained through one of or a combination of following manners:
recording by the UE,
recording by the UE according to a configuration by network administration,
recording by the UE according to a configuration by a TCE, and
recording by the UE according to a configuration by a base station.

8. The method according to claim 6, wherein the first information is reported in one of the following conditions:
the UE being in a connected state,
the UE being in a transition procedure to the connected state,
the UE being transmitting an RRC re-establishment request message, and
the UE being transmitting a radio link failure report.

9. The method according to claim 6, wherein the first information is reported under the request of a network side, or
the first information is reported by the UE proactively, or
the first information is reported under the request of the network side following the UE informing the network side of existence of relevant information.

10. The method according to any one of claims 6 to 9, wherein the first information is one or more of:
T316 configured by a network side;
a radio link failure (RLF) detection related parameter used when a master cell group (MCG) failure is detected;
a time difference between a transmitting of MCG failure information and a reception of feedback information from the network side;
an elapsed time of the T316 at the reception of the feedback information from the network side after the transmitting of the MCG failure information;
a proportion or percentage of a time duration of the T316 accounted for by the elapsed time of the T316 at the reception of the feedback information from the network side after the transmitting of the MCG failure information;
whether the feedback from the network side is received prior to expiration of the T316;
whether the feedback from the network side is received at the expiration of the T316;
feedback information received prior to the expiration of the T316;
feedback information received at the expiration of the T316;
status information of a secondary cell group (SCG);
whether the UE is performing a procedure of conditional PSCell change (CPC);
whether the UE is performing a procedure of conditional PSCell addition (CPA);
whether the UE has triggered CPC;
whether the UE has triggered CPA;
indication information indicating that the UE has performed a fast MCG link recovery, in case that a re-establishment or handover occurs;
measurement information of a serving cell, a neighbor cell, and a target cell measured prior to the handover being initiated or during the handover, in case that a handover command is received subsequent to the transmitting of the MCG failure information;
a reconfigured parameter, in case that a reconfiguration command is received subsequent to the transmitting of the MCG failure information;
a measurement result of a master node (MN), the MCG, or a primary cell (PCell), in case that an RRC release command is received subsequent to the transmitting of the MCG failure information; and
indication information indicating that the measurement result exceeds a predetermined threshold, in case that the RRC release command is received subsequent to the transmitting of the MCG failure information.

11. The method according to claim 6, wherein the configuring the fast master cell group link recovery based on the first information comprises:
in case that no feedback information is received from a network side at the expiration of T316, the UE has performed a re-establishment, and it is determined that the UE does not receive feedback from the network side due to the T316 being configured too short based on T316 configured by the network side, whether feedback from the network side is received prior to the expiration of the T316, whether the feedback from the network side is received at the expiration of the T316, indication information enabling the network side to be aware that the UE has performed a fast MCG link recovery in case that a re-establishment or handover occurs, and a measurement result of the UE, configuring the T316 to be longer.

12. The method according to claim 6, wherein the configuring the fast master cell group link recovery based on the first information comprises:
in case that no feedback information is received from a network side at the expiration of T316, the UE has performed a re-establishment, and it is determined that an SCG is in a deactivated state based on status information of the SCG, configuring the T316 to be longer such that the UE does not perform the re-establishment prematurely; and/or
in case that no feedback information is received from the network side at the expiration of T316 and the UE has performed a re-establishment, configuring, based on information in an RLF detection related parameter used when an MCG failure is detected, a parameter for the UE to detect the MCG failure to be shorter to enable the UE to detect a potential RLF earlier.

13. The method according to claim 6, wherein the configuring the fast master cell group link recovery based on the first information comprises:
configuring T316 to be longer in case that it is determined that a time difference between an elapsed time of the T316 at the reception of the feedback information from the network side and an expiration of the T316 is within a predetermined duration based on a time difference between a transmitting of MCG failure information and a reception of feedback information from the network side, an elapsed time of the T316 at the reception of the feedback information from the network side after the transmitting of the MCG failure information, a proportion or percentage of a time duration of the T316 accounted for by the elapsed time of the T316 at the reception of the feedback information from the network side after the transmitting of the MCG failure information, a measurement result of the UE, and the T316 configured by the network side; or
configuring the T316 to be shorter in case that it is determined that the time difference between the elapsed time of the T316 at the reception of the feedback information from the network side and the expiration of the T316 is longer than the predetermined duration.

14. The method according to claim 6, wherein the configuring the fast master cell group link recovery based on the first information comprises:
in case that it is determined that an MCG failure occurs during a procedure of CPC based on whether the UE is performing the procedure of CPC, whether the UE is performing a procedure of CPA, whether the UE has triggered CPC, whether the UE has triggered CPA, and indication information enabling the network side to be aware that the UE has performed a fast MCG link recovery in case that a re-establishment or handover occurs, configuring the CPC earlier.

15. The method according to claim 6, wherein the configuring the fast master cell group link recovery based on the first information comprises:
determining whether configuration information for a handover is reasonable based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that a handover command is received subsequent to the transmitting of the MCG failure information.

16. The method according to claim 6, wherein the configuring the fast master cell group link recovery based on the first information comprises:
according to whether the UE experiences an RLF or performs a re-establishment subsequently, determining whether a newly configured parameter is reasonable based on indication information enabling a network side to be aware that the UE has performed a fast MCG link recovery in case that a re-establishment or handover occurs, and a parameter reconfigured in case that a reconfiguration command is received subsequent to the transmitting of the MCG failure information.

17. The method according to claim 6, wherein the configuring the fast master cell group link recovery based on the first information comprises:
determining whether an RRC release command is appropriate based on indication information enabling a network side to be aware that the UE has performed a fast MCG link recovery in case that a re-establishment or handover occurs, and measurement information of a serving cell, a neighbor cell, and a target cell measured prior to the handover being initiated or during the handover in case that the RRC release command is received subsequent to the transmitting of the MCG failure information.

18. A UE, comprising:
a processor configured to read a program in a memory and perform the following step:
reporting first information, the first information being information related to fast master cell group link recovery; and
a transceiver configured to receive and transmit data under control of the processor.

19. A UE, comprising:
a UE reporting module, configured to report first information, the first information being information related to fast master cell group link recovery.

20. A base station, comprising:
a processor configured to read a program in a memory and perform the following steps:
receiving first information reported by a UE, the first information being information related to fast master cell group link recovery; and
configuring the fast master cell group link recovery based on the first information; and
a transceiver configured to receive and transmit data under control of the processor.

21. A base station, comprising:
a base station receiving module, configured to receive first information reported by a UE, the first information being information related to fast master cell group link recovery; and
a base station configuration module, configured to configure the fast master cell group link recovery based on the first information.

22. A computer-readable storage medium, having a computer program stored thereon, wherein the computer program, when executed by a processor, implements the method according to any one of claims 1 to 17.
